Europäisches Patentamt

European Patent Office

Office européen des brevets

(19)

(11) Numéro de publication: **0 159 269**

**A1**

(12) **DEMANDE DE BREVET EUROPEEN**

(21) Numéro de dépôt: 85400724.2

(22) Date de dépôt: 11.04.85

(51) Int. Cl.⁴: **B 25 J 13/08**
**B 25 J 9/00**

(30) Priorité: 12.04.84 FR 8405796

(43) Date de publication de la demande:
23.10.85 Bulletin 85/43

(84) Etats contractants désignés:
DE GB IT NL SE

(71) Demandeur: AEROSPATIALE Société Nationale
Industrielle
37 boulevard de Montmorency
F-75781 Paris Cédex 16(FR)

(72) Inventeur: Lainez, Vincent
69 route de Grenade
F-31700 Blagnac(FR)

(72) Inventeur: Cantin, Pierre
La Petite Bourelière
F-44120 Vertou(FR)

(72) Inventeur: Giraud, Alain Marius
3 Impasse Hubert Latham
F-31400 Toulouse(FR)

(72) Inventeur: Vialaret, Guy Francis
37 Rue des Muriers
F-31500 Toulouse(FR)

(74) Mandataire: Santarelli, Marc et al,
Cabinet Rinuy et Santarelli 14, avenue de la Grande
Armée
F-75017 Paris(FR)

(54) Procédé et dispositif de positionnement atutomatique d'une outil de travail par rapport à une pièce.

(57) L'invention concerne le positionnement d'un outil de travail, tel que perceuse, riveteuse, tas de rivetage ou électrode de soudage notamment, par rapport à une pièce en sorte d'amener une direction de travail caractéristique de l'outil en regard d'au moins une trace matérielle ménagée sur cette pièce.

Selon l'invention, on amène l'outil approximativement (P') en regard de la trace (P) sur la pièce, on détecte l'écart entre la direction de travail de l'outil (P') et la trace à l'aide d'un capteur de centrage et on asservit en position l'outil en sorte d'annuler cet écart (P'P), puis on détecte l'orientation de cette direction de travail par rapport à la normale Az menée à la surface de la pièce en cette trace à l'aide d'un détecteur d'aplomb et on asservit en orientation l'outil en sorte de faire coïncider cette direction de travail avec cette normale.

Application notamment à l'assemblage automatique d'éléments de structure de grandes dimensions tels que fuselage ou voilure d'aérodynes.

FIG.5

### Procédé et dispositif de positionnement automatique
### d'un outil de travail par rapport à une pièce

La présente invention vise un procédé et un dispositif de positionnement automatique d'un outil de travail par rapport à une pièce (éventuellement en plusieurs parties) en sorte d'amener une direction de travail caractéristique de l'outil en regard d'au moins une trace matérielle ménagée sur cette pièce en un emplacement prédéterminé. L'invention vise plus particulièrement, mais non exclusivement, l'assemblage de structures de grandes dimentions telles que, par exemple, des structures (voilure, fuselage...) d'aérodyne, et le positionnement automatique d'au moins un des outils de travail intervenant pour un tel assemblage, avant (perçage de trous de fixation par exemple) ou pendant l'assemblage proprement dit de la structure ou de la pièce en plusieurs parties à assembler.

L'invention concerne tout particulièrement des assemblages rivés mais peut également s'appliquer à d'autres type d'assemblage tels que des assemblages vissés ou bien encore des assemblages par soudage par points ou par soudage T.I.G. (Tungsten Inert Gas) ; cela suppose une mise en recouvrement préalable des éléments à assembler qui se présentent généralement sous la forme de tôles planes ou ayant subi un formage (surfaces gauches).

L'essentiel des processus d'assemblage de tôles en recouvrement, tels que rencontrés dans l'industrie aéronautique, font appel le plus souvent à des techniques de perçage puis de rivetage ou bien de boulonnage.

L'automatisation de ces processus pose de difficiles problèmes en raison de la précision requise pour le positionnement des trous et du dimensionnement toujours important des structures, qu'il s'agisse d'un fuselage ou bien d'une voilure. Assurer une précision de + 0,1 mm, tout au long de panneaux de l'ordre de 10 mètres de longueur, ressort d'une technique qui n'est pas encore opérationnelle dans le domaine de la robotique.

On connaît déjà, il est vrai, des systèmes sophistiqués d'assemblage automatique, comportant des robots programmables et des outils de travail dotés d'une certaine capacité d'adaptation vis-à-vis de la surface de pièces à assembler, d'après par exemple l'article de Mr. MORESSEE paru dans la revue MACHINE MODERNE en décembre 1967 (pages 3 à 7) ou du brevet GB-2.088.095.

Toutefois, il s'agit de systèmes exclusivement capables de procéder par soudage. Ainsi le premier document concerne une machine à souder par points, à commande numérique, pour la construction aérospatiale d'avant-garde, dans laquelle des électrodes viennent se positionner à de multiples reprises en regard des pièces à souder et s'orientent automatiquement perpendiculairement à la surface de ces pièces grâce à des palpeurs associés à ces électrodes. La position même des points de soudures n'est pas définie avec grande précision. Quant au second document, il concerne un soudage progressif le long d'un bord d'une pièce à souder à une autre pièce d'une carosserie automobile, à l'aide d'une tige de soudage montée pivotante en sorte de pouvoir suivre avec précision ledit bord malgré d'éventuelles dérives latérales d'un robot auquel est fixé cette tige. Aucun de ces documents n'est adapté à repérer des marques ou traces matérielles ponctuelles, telles que des trous, et à y amener en regard, avec grande précision, une direction caractéristique d'un outil de travail. Les enseignements de ces documents ne se prêtent donc pas, par exemple, à un assemblage par rivetage pour lequel les emplacements des trous sont définis avec précision et les outils de travail doivent être disposés avec précision aussi bien en position qu'en orientation.

Si l'on analyse le processus technologique de ce genre d'assemblage, il apparaît que l'axe virtuel par lequel doit passer un foret de perçage d'un trou, l'axe d'un rivet ou d'une vis de fixation et enfin l'axe d'une machine à river ou à visser, doivent être sensiblement perpendiculaires à la partie de surface où doit être réalisé un point de fixation (ladite surface étant le plus souvent gauche).

Cette double condition de précision et de perpendicularité est encore complétée par l'exigence de mise en regard, de part et d'autre de la structure à assembler des deux outils nécessaires à la fixation, soit un tas de rivetage et un marteau (pneumatique) dans un cas, soit une visseuse et un porte-écrou dans un deuxième cas où la précision de mise en coïncidence de la vis et de l'écrou doit de plus être assurée de manière parfaite.

Selon l'art antérieur de la technique du rivetage, la pose et l'écrasement des rivets (plus de cinq millions sur un avion comme l'AIRBUS), ont été essentiellement effectués jusqu'à présent à la main à l'aide de deux compagnons, l'un tenant le marteau de rivetage et l'autre le tas, les séquences s'établissant comme suit (après perçage) :

- repérage du trou,

- insertion du rivet,

- contrôle du centrage et de la perpendicularité du marteau (ou pistolet) et du tas,

- réglage des forces d'appuis (la force exercée sur la tête du rivet par le pistolet devant être supérieure à celle exercée sur le tas), et

- synchronisation de l'opération de rivetage proprement dite.

La séquence manuelle impliquait donc une insertion du rivet effectuée au doigté et un centrage visuel ; la mise en perpendicularité était réalisée intuitivement en cours de frappe par interprétation des efforts ou encore à l'arrêt par interprétation du contact réalisé sur le rivet.

Sans parler des autres processus d'assemblage par boulonnage ou soudage par points, si l'on résume l'ensemble des difficultés liées au processus d'assemblage par rivetage qui constitue l'essentiel du travail réalisé actuellement sur les postes d'assemblage, notamment dans le domaine aéronautique, on peut noter que les robots dits "de première génération" ne peuvent convenir pour les raisons suivantes :

- précision de travail insuffisante compte tenu des tolérances requises,

- trop grand nombre de points de fixation à effectuer, ce qui exclut un apprentissage et une programmation point à point,

- mauvaise connaissance et absence de répétitivité de la position absolue des points de fixation sur l'assemblage.

La présente invention a pour objet de pallier ces inconvénients grâce à la mise en oeuvre d'éléments actifs et sensitifs combinés.

L'invention se place en fait dans le cadre très général du positionnement d'un outil de travail de type quelconque, qu'il soit adapté à être employé seul, ou que sa mise en oeuvre nécessite l'intervention d'un outil complémentaire.

L'invention propose ainsi un procédé de positionnement automatique d'un outil de travail par rapport à une pièce sur laquelle au moins une trace matérielle ponctuelle a été ménagée en un emplacement prédéterminé dont on connaît des coordonnées au moins approximatives sur la pièce, en sorte d'amener une direction de travail caractéristique de l'outil en regard de cette trace, caractérisé en ce qu'on produit un mouvement relatif entre l'outil (10, 11, 14) et la pièce (5) en sorte d'amener l'outil auprès dudit emplacement prédéterminé sur la pièce, on détecte (9) l'écart entre la direction de travail (OZ) de l'outil et la trace (P), et on asservit en position l'outil en sorte d'annuler cet écart, puis l'on détecte (13) l'orientation de la direction caractéristique de l'outil par rapport à la normale (AZ) menée à la surface de la pièce (5) en cette trace (P) et on asservit en orientation l'outil en sorte de faire coïncider cette direction avec cette normale.

La mise en oeuvre de l'invention s'avère avantageuse dès qu'il s'agit d'effectuer avec un outil une succession importante d'opérations de même nature, dans des conditions semblables mais pas rigoureusement répétitives. Il peut s'agir d'effectuer une opération sur un grand nombre de pièces successives ou d'effectuer un grand nombre d'opérations sur une même pièce, ou un quelconque cas intermédiaire entre ces cas extrêmes.

L'invention propose également, pour la mise en oeuvre du procédé indiqué ci-dessus un dispositif de positionnement automatique d'un outil de travail par rapport à une pièce, adapté à amener une direction de travail caractéristique de cet outil en regard successivement d'une série d'au moins deux traces matérielles (P) ménagées préalablement sur cette pièce en des emplacements prédéterminés dont on connaît des coordonnées au moins approximatives sur la pièce, caractérisé en ce qu'il comporte un robot (2,4) lié à une structure de référence (R) et muni d'une tête de travail (6,8) admettant au moins un degré de liberté et portant au moins ledit outil de travail (10, 11, 14), un capteur de centrage (9), porté par la tête de travail et adapté à détecter un écart entre la direction de travail (OZ) de l'outil et une trace matérielle (P) sur la pièce (5), ainsi qu'un capteur d'aplomb (13) également porté par la tête de travail et adapté à détecter l'orientation de la normale (Az) menée à la surface de la pièce (5) à l'emplacement d'une trace matérielle (P) par rapport à la direction de travail (OZ) de l'outil, et un système de commande et de traitement (16-20, 26-28) associé au robot, connecté au capteur de centrage et au détecteur d'aplomb, et adapté à amener automatiquement la tête de travail successivement en regard approximativement de chaque trace et, pour chaque trace, à asservir en position la tête de travail par rapport à ladite pièce en sorte d'amener la direction caractéristique de l'outil en regard de cette trace, puis à asservir en orientation la tête de travail vis-à-vis de la pièce, en sorte de faire coïncider la direction de travail de l'outil avec ladite normale.

On notera que, ni l'article de Mr MORESSEE, ni le brevet britannique précités ne décrivent ni ne suggèrent la mise en oeuvre, à la fois, de traces matérielles ponctuelles de moyens de centrage en position de l'outil de travail et des moyens de réglage en orientation de l'outil de travail.

Le capteur de position et le détecteur d'aplomb sont de préférence substituables à l'outil de travail considéré, la direction de travail de ce dernier étant définie par rapport à la tête de travail.

Les traces matérielles sont généralement des trous et l'invention peut s'appliquer au perçage de trous de fixation dans des parties de pièces à assembler. Elle s'applique également, de façon avantageuse, au positionnement de l'un au moins de deux outils complémentaires d'assemblage, par exemple le positionnement d'un tas de rivetage tandis qu'un compagnon manoeuvre un marteau-riveur.

L'invention préconise toutefois que le dispositif de positionnement précité assure le positionnement des deux outils complémentaires d'assemblage, voire d'outils de travail annexes pour la réalisation d'opérations préparatoires.

En pratique, les robots dont on dispose, qui satisfont aux exigences de tolérances posées pour une application donnée, admettent un débattement (ou champ d'action) limité, généralement inférieur à la zone de travail que couvre l'ensemble des traces matérielles ménagées par exemple sur une voilure ou un fuselage. Selon une disposition originale en elle-même de l'invention, celle-ci préconise dans ce cas que le ou les robots soient montés sur la tête porteuse d'un manipulateur de grand débattement, placé sous le contrôle du système de commande du robot en sorte de placer ce robot successivement en regard de chacun d'une série de sous-groupes de traces (domaines d'exploration) délimités dans la zone de travail.

En pratique, de tels manipulateurs de grand champ d'action sont assez peu précis ; cela ne s'avère pas gênant selon l'invention puisque le positionnement final de l'outil en face de chaque trace est assuré par asservissement en fonction des indications d'un capteur de position voire d'un détecteur d'aplomb. Il est à noter que, du fait de cette capacité de l'outil à se positionner en fin de compte par asservissement, on peut introduire dans le système de commande du robot et de l'éventuel manipulateur associé des coordonnées approximatives des points de travail, correspondant avantageusement à une version simplifiée du maillage (ou réseau) réel des traces matérielles ménagées sur la pièce considérée. On peut aussi, le cas échéant, réduire les capacités de mémoires du système de commande, ce qui peut se révéler avantageux du point de vue coût d'investissement.

Il est à remarquer que le système de commande assure :

- une commande en boucle ouverte du robot et d'un éventuel manipulateur associé, et

- une commande en boucle fermée du robot après traitement approprié des informations transmises par les divers capteurs et détecteurs.

Comme cela a été indiqué précédemment, les directions de travail de deux outils complémentaires d'assemblage doivent être à la fois en coïncidence l'une avec l'autre ainsi qu'avec un point de fixation (P) à réaliser, ce qui conduit à définir un axe virtuel de repérage préalable avant de déterminer le positionnement réel de cesdits axes de travail. Autrement dit, des capteurs destinés à définir cet axe virtuel de repérage doivent être associés à ces outils afin de permettre un positionnement et une orientation convenables de ces derniers l'un par rapport à l'autre. Il est à noter que le positionnement d'un tas de rivetage peut satisfaire à une tolérance moins stricte que celle d'un marteau-riveur dans la mise en coïncidence des axes de travail.

De tels capteurs de position et/ou d'orientation peuvent être de différents types, notamment pneumatique, à photorésistances, à phototransistors, inductif, ou à fibres optiques.

La présente invention va de toute manière être bien comprise dans la suite du texte qui va donner à titre d'exemple non limitatif, en regard des dessins annexés, une forme de réalisation qui semble la meilleure solution dans le cas d'un dispositif automatique de rivetage de structure d'aéronef.

Sur les dessins :

- la figure 1 est un schéma montrant la disposition spatiale des trièdres de référence des éléments constitutifs d'un dispositif automatique d'assemblage selon l'invention ;

- la figure 2 est un schéma montrant diverses séquences caractéristiques d'un procédé automatique de positionnement selon l'invention ;

- la figure 3 est une vue schématique en perspective montrant, dans un espace orthonormé, la démarche logique d'un robot programmé selon l'invention ;

- la figure 4 est une vue schématique en élévation des éléments mécaniques composant un dispositif conforme à l'invention ;

- la figure 5 en est une vue schématique de détail montrant la disposition du robot extérieur dans la position repérée par la flèche V de la figure 4 ;

- la figure 6 en est une autre vue schématique de détail dans la position repérée par la flèche VI de la figure 4 ;

- la figure 7 est une vue en perspective partielle du robot extérieur avec sa tête de travail et ses outils d'assemblage ;

- la figure 8A est une vue schématique d'une portion de réseau de points de fixation sur la structure à assembler et les figures 8B à 8E sont des vues partielles en coupe d'un point de fixation selon des étapes de l'assemblage de la structure à assembler ;

- la figure 9A est une vue en coupe partielle des deux têtes de travail en cours de positionnement et d'orientation, et la figure 9B est une vue partielle de dessus de la tête de travail intérieure montrant le centreur de tas selon la ligne IX-IX de la figure 9A ;

- la figure 10 est une vue en perspective partielle du capteur de centrage inductif de la figure 9A ;

- la figure 11 est un schéma électrique du capteur de centrage de la figure 10 ;

- la figure 12 est une vue schématique partielle en perspective des jauges du détecteur d'aplomb de la figure 9A ;

- la figure 13 est un schéma du système de commande informatique d'un dispositif automatique d'assemblage selon l'invention ; et

- les figures 14A à 14C sont des vues schématiques en élévation de la tête de travail extérieure pour des positions successives de ses capteurs et de ses outils de travail.

La description qui suit est donnée à titre d'exemple  à propos de l'assemblage d'une structure d'aéronef de grandes dimensions, à savoir un fuselage, selon des réseaux de points de fixation de forme quelconque (des lignes de points ou, le plus souvent, des mailles rectangulaires, carrées ou en quinconce). Les éléments de la structure (S) à assembler sont positionnés par rapport à une structure de référence R, à laquelle on associe un trièdre de référence fixe (O (R), X,Y,Z). Chacun des deux outils complémentaires d'assemblage est monté sur une tête de travail que l'on désigne, compte tenu de la configuration fermée de la structure à assembler, par tête de travail interne ou externe selon sa position par rapport à cette structure ; à chaque tête de travail est associé un trièdre de référence noté (O (TT), X,Y,Z), O (TT) étant identifié par O(TTi) ou O (TTe), selon qu'il s'agit de la tête interne ou de la tête externe. Chaque tête de travail est liée à un robot vis-à-vis duquel elle dispose d'au moins un degré de liberté (cinq degrés en général ). Chacun de ces robots est monté sur la tête porteuse d'un manipulateur en sorte de disposer d'au moins un degré de liberté vis-à-vis de la structure de référence (quatre degrés par exemple) ; à chaque tête porteuse est associé un trièdre de référence (O (SP),X,Y,Z), l'appellation SP étant suivie de la lettre "i" ou "e" selon que la tête porteuse est à l'intérieur ou à l'extérieur de la structure S. En variante simplifiée non représentée, les deux robots sont montés sur un même manipulateur lorsque la géométrie de la structure à assembler le permet.

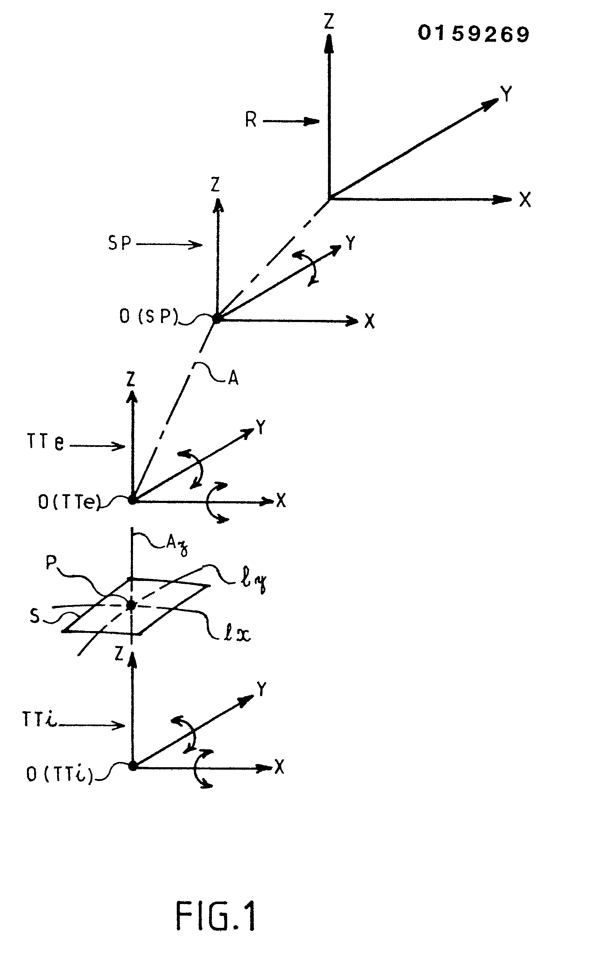

La figure 1 illustre de façon très schématique, une portion de structure à assembler (S), une structure de référence (R), une tête porteuse (SP) et une première tête de travail extérieure TTe, ainsi qu'une seconde tête de travail TTi (interne) dont la tête porteuse associée n'est pas représentée. Les trièdres de référence associés aux têtes TTe et SP sont reliés par une liaison désignée par A.

Par convention, les axes O(TTe)-Z et O(TTi)-Z désignent les axes selon lesquels les outils d'assemblage complémentaires dont sont pourvus les têtes sont adaptés à travailler.

Si l'on considère la figure 1, on voit que le problème à résoudre dans un dispositif d'assemblage automatique conforme à l'invention, avant toute opération d'assemblage, consiste :

- à amener en coïncidence l'axe O(TTe)-Z de la tête de travail externe (TTe) et l'axe O(TTi)-Z de la tête de travail interne (TTi) selon un axe commun Az,

- à assurer l'orientation de cet axe Az selon une normale à la surface de la structure à assembler (S), et

- à centrer cet axe (Az) sur un point (P) d'assemblage de ladite structure.

En complément, des translations le long de ces axes sont nécessaires pour permettre le dégagement des outils de travail ou des capteurs.

Si l'on suppose maintenant que les assemblages dont il est question doivent être assurés selon des lignes (ly) et (lx) sur la surface (S), ce qui correspond au maillage des rivetages ou des boulonnages structuraux, on vérifie immédiatement que lorsque lesdites structures sont de très grandes dimensions (fuselage par exemple), le positionnement direct de Az sur des points successifs P de fixation ne peut être assuré avec la précision requise par les dispositifs tels que manipulateurs ou robots connus actuellement.

Dans le cas général , pour assurer les mouvements nécessaires à l'orientation et au positionnement de l'axe (Az), on doit assurer aux têtes de travail des déplacements et rotations correspondant à cinq degrés de liberté autour de O(TTe) et autour de O(TTi), soit trois translations autour des axes et des rotations autour de deux axes, X et Y de préférence.

Il est à noter que si de tels positionnements et orientations sont parfaitement réalisables actuellement avec les précisions requises pour de petites structures, elles sont irréalisables pour des structures importantes rencontrées dans l'industrie aérospatiale sur les fuselages d'avions par exemple.

C'est pourquoi, selon un mode préféré de l'invention, on associe un robot précis et un manipulateur lourd peu précis mais de très grande dimension et l'on adjoint à l'ensemble ainsi réalisé un système logique de positionnement sur des traces (ou traceurs) pour le repérage des points de fixation à réaliser ainsi que des moyens de verrouillage appropriés, pour le robot et le manipulateur.

Un axe A matérialise sur la figure 1 le mode de couplage entre O(TTe) et O(SP) ; le trièdre associé à ce dernier est, dans le cas général, animé de quatre degrés de liberté (translations selon les axes X, Y et Z plus une rotation selon Y).

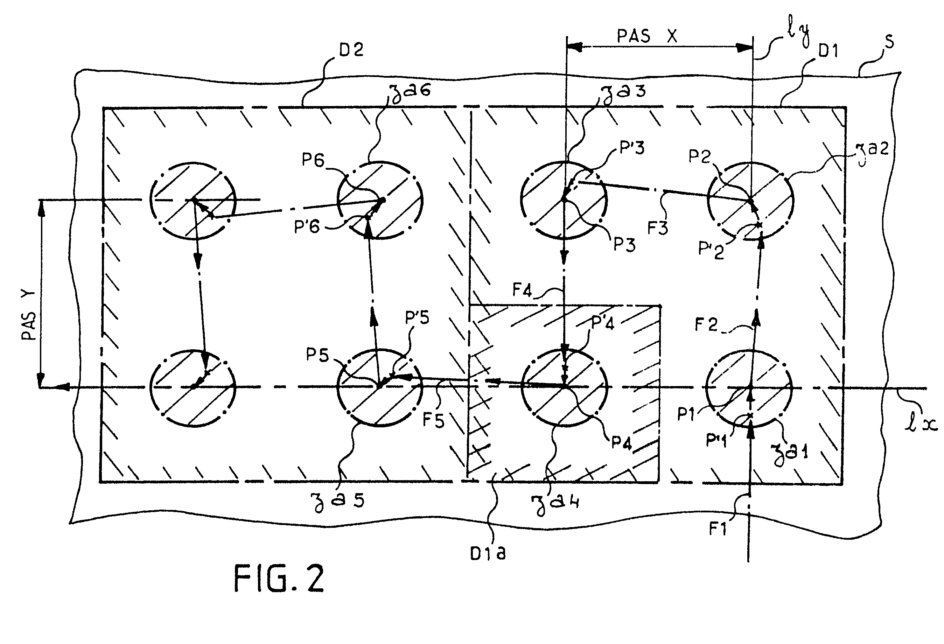

Le système logique de positionnement commande de préférence les têtes de travail selon la suite de séquences indiquée par le schéma de la figure 2.

La fonction de la tête porteuse (SP) est d'assurer le déplacement du robot associé d'un domaine d'exploration (D1) à un autre (D2...) sur la structure (S) alors que la tête de travail associée à ce robot effectue à l'intérieur desdits domaines d'exploration un déplacement programmé d'une zone d'approche (za) à une autre, chaque zone d'approche étant centrée sur un point de fixation (P). Des capteurs définis ci-dessous assurent ensuite dans chaque zone d'approche (za) un centrage parfait de la tête de travail sur chaque point (P).

Ainsi, lorsque le manipulateur lourd et le robot ont amené selon F1 la tête (TTe) à l'intérieur de (za1), en un point tel que (P'1) par exemple, et que leur verrouillage a été effectué, les capteurs dont ladite tête est porteuse assurent automatiquement le positionnement correct de cette dernière sur (P1) permettant, après escamotage convenable, la mise en oeuvre des outils de travail appropriés.

Par programmation du robot, (TTe) se déplace ensuite dans la seconde zone d'approche (za2) selon F2 pour parvenir en (P'2) où se produit ensuite le centrage comme décrit ci-dessus en (P1).

La séquence se poursuit ensuite pour les zones (za3), (za4) où la tête (TTe), venant respectivement en les points (P'3), (P'4), va venir se centrer sur (P3) et (P4) selon les trajets F3 et F4.

Dans l'exemple considéré, cette programmation "allégée" est basée sur la connaissance préalable des pas d'un maillage représentatif du réseau, régulier ou non, des points d'assemblage (P) selon les lignes (ly) et (lx).

Lorsque, dans le domaine d'exploration (D1), la tête de travail atteint sa limite de déplacement, par exemple sur la position (P4) du domaine (D1), il est nécessaire de produire un changement de position du robot et de la tête porteuse (SP).

Pour cela, dans le domaine (D1), la tête de travail reste centrée sur la trace (P4) ; lors d'un déplacement incrémental programmé de la tête porteuse pour atteindre le domaine (D2), la tête de travail reste assujettie, par asservissement grâce à ses capteurs, sur ledit point (P4).

Les opérations d'assemblage en position (P4) seront en général effectuées sur le domaine (D2) qui va se trouver de fait partiellement commun avec (D1) selon (D1a) qui contient donc au moins un point.

Après le traitement de (P4), on passe à la zone d'approche (za5), et ce, comme décrit précédemment pour le déroulement des opérations suivantes.

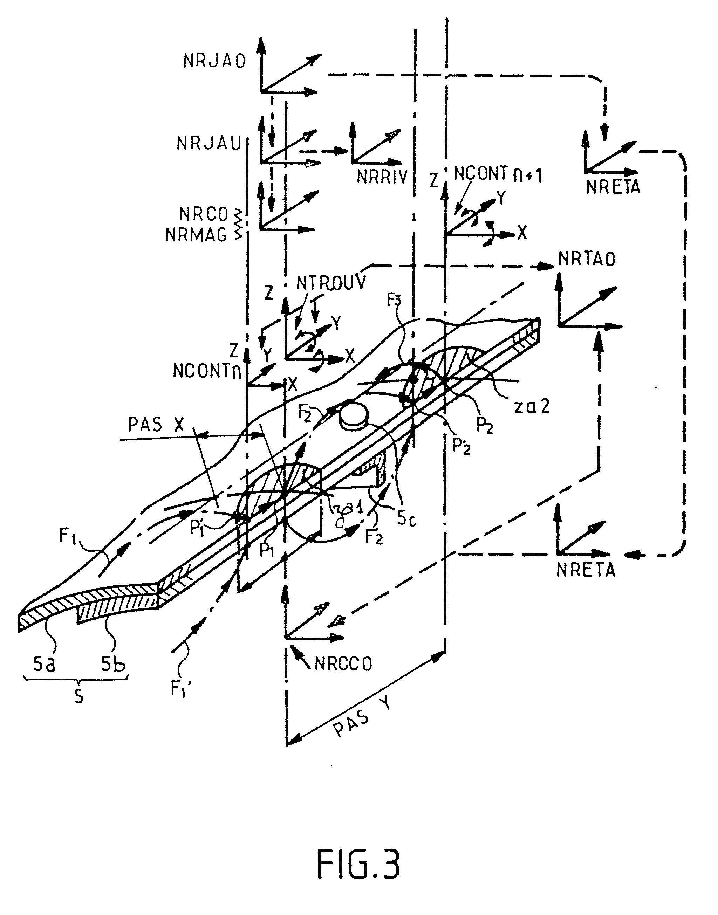

La figure 3 montre schématiquement la "marche" de la tête de travail (TTe) selon F1 puis F2, F3,etc.., de même que la "marche" de la tête de travail (TTi) selon F'1, puis F'2, F'3, etc. pour l'assemblage de tôles 5a et 5b. Des obstacles divers 5c tels qu'agrafes d'épinglages ou encore membrures sont avantageusement évités grâce à des détecteurs appropriés dont il sera parlé dans la suite du texte.

Dans la présente description et par pure convenance, les définitions ci-après sont données aux différents éléments mis en oeuvre selon l'invention :

- LUCIFON (ou Logiciel Utilisé en Conversationnel pour l'Intégration de FONctions évolutives à un robot) pour le logiciel de commande du robot,

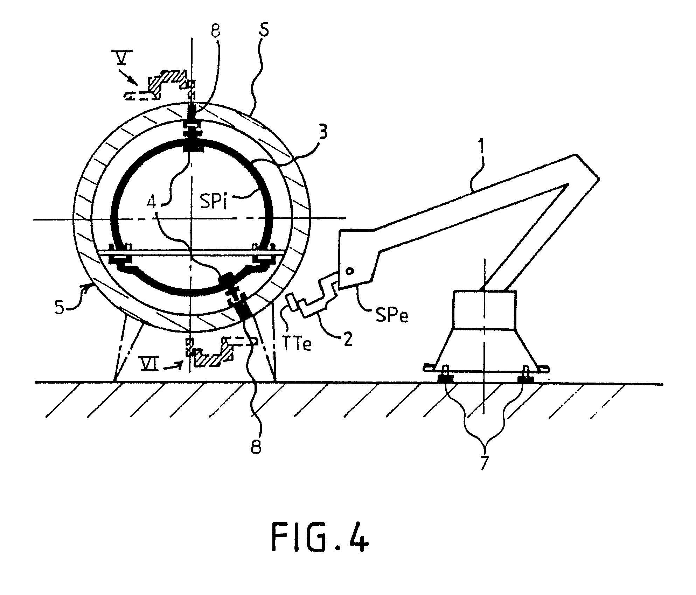

- manipulateur programmable lourd pour le manipulateur 1 dont l'espace de travail représenté en traits mixtes sur la figure 4 est défini en fonction de la dimension des éléments à assembler. Il peut être de toute nature, en portique...,

- outils pour les dispositifs actifs montés sur la tête de travail, qu'il s'agisse d'outils de perçage, de rivetage, de pose et/ou de dépose d'agrafes d'épinglage, de soudage par point, de vissage..., et

- structure pour l'ensemble des éléments à assembler.

0159269

13

Il est à noter que les points de fixation (P) d o i v e n t être compris dans le sens de repères de positionnement en vue des opérations d'assemblage ; ils peuvent être de simples traces matérialisées sur la structure à assembler; les points 0 désignent les points d'origine des déplacements et rotations dans l'espace.

En revenant à la fonction fondamentale découlant de la mise en oeuvre d'un dispositif selon l'invention, dans le cadre d'un assemblage on doit considérer que tous les assemblages de type rivés ou boulonnés requièrent une suite d'opérations simples qui peut se résumer comme suit (en rappelant que ces opérations ont été réalisées à la main jusqu'à ce jour) :

- repérage de l'emplacement du point d'assemblage,
- perçage d'un trou orienté complété ou non par un fraisurage,
- mise en position orientée dans ce trou d'une agrafe d'épinglage, d'un rivet ou d'un boulon, et
- applications orientées conjointes du pistolet d'agrafage/ désagrafage ou de rivetage et du tas, suivie du rivetage proprement dit, ou présentation orientée de l'écrou en regard du boulon, puis vissage de cet écrou au couple prédéterminé (en notant qu'une rondelle peut être interposée).

La complexité des opérations à exécuter sur des structures importantes requiert une définition des fonctions propres à chaque cas, qui doit tenir compte de divers paramètres tels que précision, rapidité d'exécution, facilité de mise en oeuvre...

A titre purement d'exemple non restrictif et pour bien montrer les conditions d'application possibles de l'invention, les figures 4 et suivantes illustrent la réalisation pratique d'un rivetage maillé sur un tronçon de fuselage d'avion gros porteur.

L'ensemble du dispositif comporte essentiellement (figure 4) une structure externe 5, fixe par rapport au sol, sur laquelle doivent être exécutés les points d'assemblage rivés, un manipulateur programmable lourd externe 1 muni d'une tête porteuse SPe portant un robot 2 avec sa tête de travail, et qui est par exemple assujetti à se déplacer longitudinalement sur des rails 7, un manipulateur programmable lourd interne 3 également déplaçable longitudinalement et muni d'une tête porteuse interne SPi qui porte un ou des robots 4 avec sa ou ses têtes de travail 8.

Dans l'exemple représenté, la tête de travail porte un tas de rivetage et le manipulateur 3 est un montage adapté permettant, par assujettissement aux rails du plancher du fuselage par exemple, une mise en coïncidence dudit tas en regard de chaque trou de rivetage.

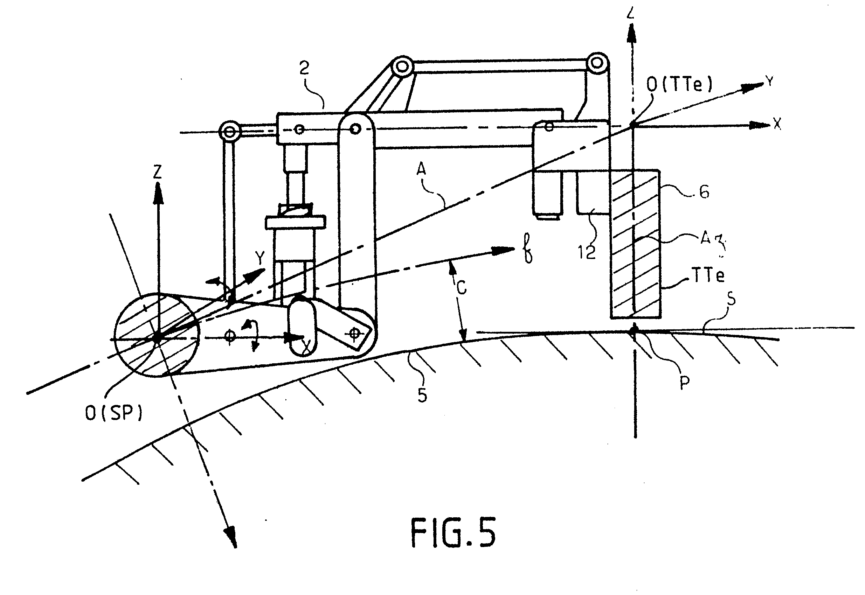

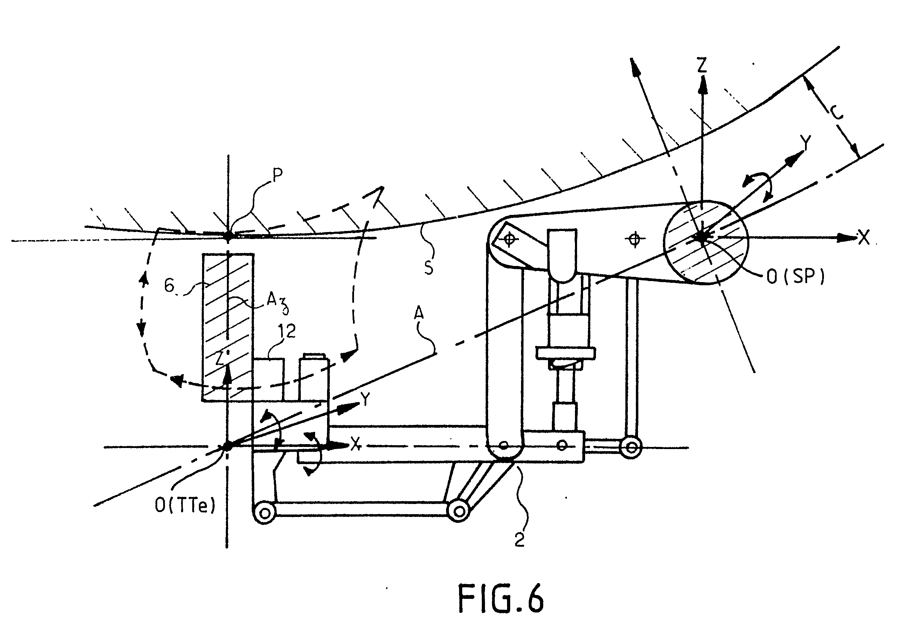

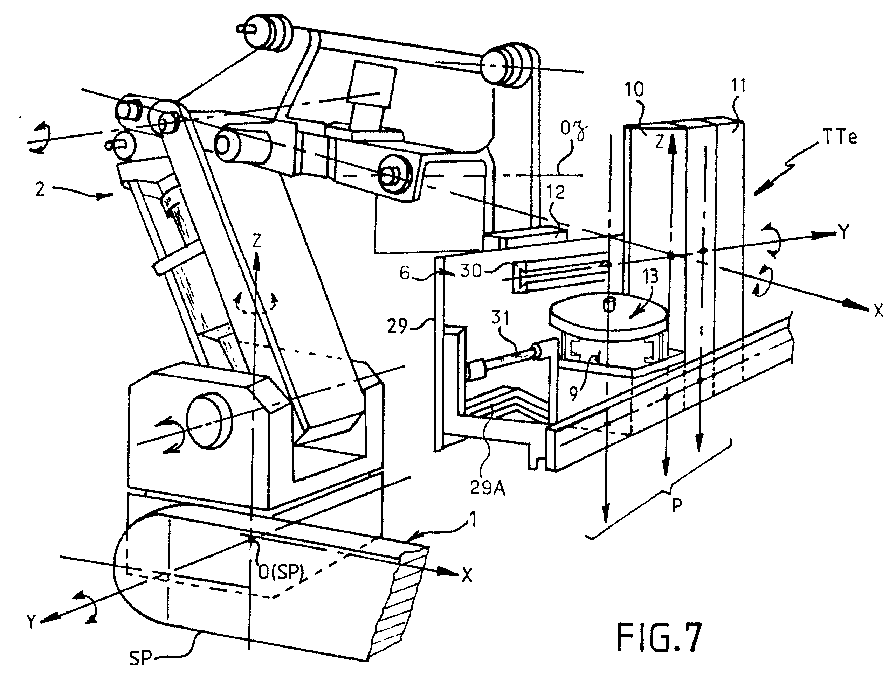

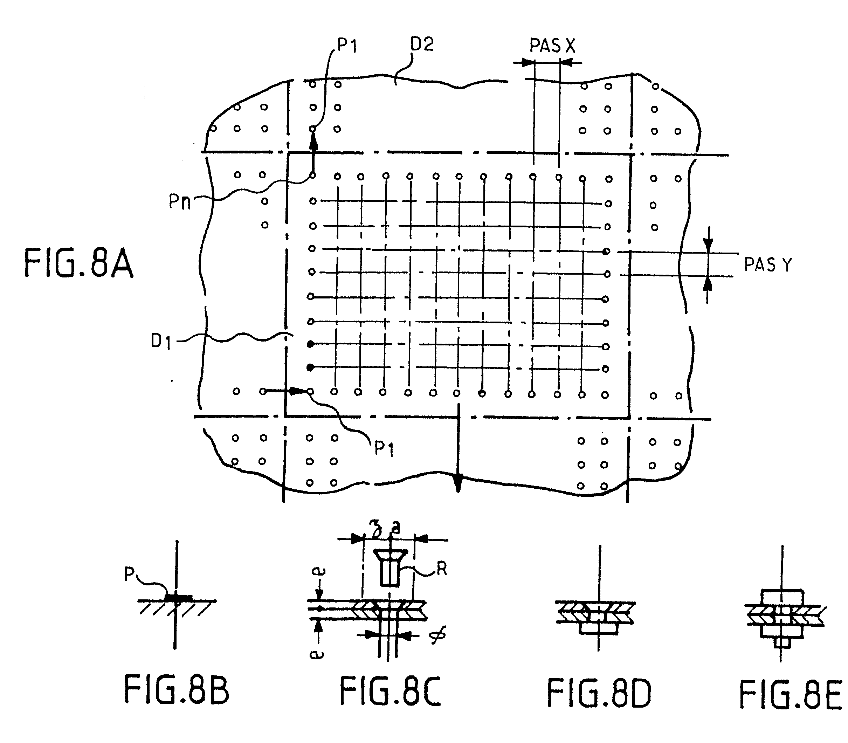

Sur les figures 5 et 6, le robot 2 jumelé au manipulateur programmable lourd 1 est respectivement en position sommitale, et en position basse. Il ressort de l'examen de ces figures que le manipulateur programmable lourd 1 a pour rôle d'assurer le déplacement du point 0 (SP) (avec une faible précision) sur une trajectoire $f$ qui doit rester à une distance sensiblement constante $c$ par rapport à la surface de la structure (S) ; le point 0 (SP) est représentatif de l'axe de liaison avec le point 0(TTe) représentatif du point de déplacement spatial de la tête de travail 6. Il est précisé que ce manipulateur programmable lourd doit pouvoir se verrouiller lorsque la tête de travail extérieure 6 se trouve placée dans une situation donnée.

L'examen des figures 5 et 6 montre également la possibilité d'assurer dans tous les cas un déplacement et de permettre à l'axe 0 (TTe)-z (voir figure 7) d'être perpendiculaire à la normale de la surface (S).

Sur la figure 7, une conformation de robot 2 est indiquée en perspective, laissant apparaître la possibilité des cinq degrés de liberté autour de 0(TTe), étant à noter qu'un déplacement selon 0(TTe)-Y résulte d'une rotation autour de 0(SP)-Z. Ne faisant pas partie en elle-même de l'invention, la structure de ce robot ne sera pas détaillée plus avant.

Le robot 2 comprend, outre les mécanismes et vérins nécessaires à son orientation, la tête de travail 6 portant elle-même un capteur 9 pour le repérage des points de fixation à exécuter, qui sera détaillé ci-dessous, ainsi que des outils de travail qui peuvent être respectivement une perceuse et/ou un pistolet de rivetage, schématisés ici par des volumes 10 et 11, respectivement.

Lors des déplacements séquentiels associés à l'assemblage, le capteur 9 est escamoté par translation latérale ainsi que les outils successifs de telle sorte que le point (P) se trouve toujours en regard de l'organe chargé de la phase à exécuter (voir figures 14A à 14C).

Ainsi, lors d'une phase de repérage, le capteur 9 va se centrer sur la trace (P) qui peut être un marquage quelconque réalisé à la peinture chargée en poudre magnétique ou par tout autre traceur. Lors de la phase de perçage, ledit capteur 9 s'escamote latéralement en laissant place à la perceuse 11 qui va ensuite effectuer le perçage du trou en (P). Après perçage, ladite perceuse va s'escamoter à son tour en laissant place au pistolet de rivetage 10 qui introduit le rivet puis procède à son écrasement contre le tas qui va se trouver en regard.

En variante, le pistolet peut être remplacé par une agrafeuse/ dégrafeuse d'épingles ou bien une visseuse ou encore une boulonneuse.

Sur la figure 8A est représenté, en vue de dessus, le maillage de l'assemblage à réaliser et les figures 8B à 8E montrent différentes étapes de réalisation de cet assemblage :

- 8B, repérage du point (P),

- 8C, (après perçage du trou avec éventuellement son fraisage) insertion du rivet,

- 8D, pose du rivet, ou

- 8E, pose d'un boulon ou d'une vis.

Le maillage représenté est, par exemple, sensiblement au pas, selon X, de 40 mm et au pas, selon Y, également de 40 mm, et les tôles à assembler, qui sont généralement en alliage d'aluminium, ont sensiblement une épaisseur de 2 mm et les trous un diamètre de l'ordre de 4 mm. Ainsi, la dimension des domaines (D1) et (D2)... figurés sur la figure 8A est sensiblement de l'ordre de 480 X 480 mm, ce qui inclut 130 points (P).

Outre le centrage sur le point (P), qui nécessite des déplacements selon O(TTe)-X et O(TTe)Y, en rappelant que ce deuxième type de déplacement est assuré par la rotation autour de O(SP)-Z (par des vérins appropriés non représentés), se pose la question de la mise en aplomb de la tête de travail sur la surface de l'assemblage qui résulte des rotations autour de O(TTe)-X et O(TTe)-Y.

Ces rotations sont assurées à partir de mécanismes (schématisés en 12 à la figure 7) reliant la tête de travail 6 au robot 2.

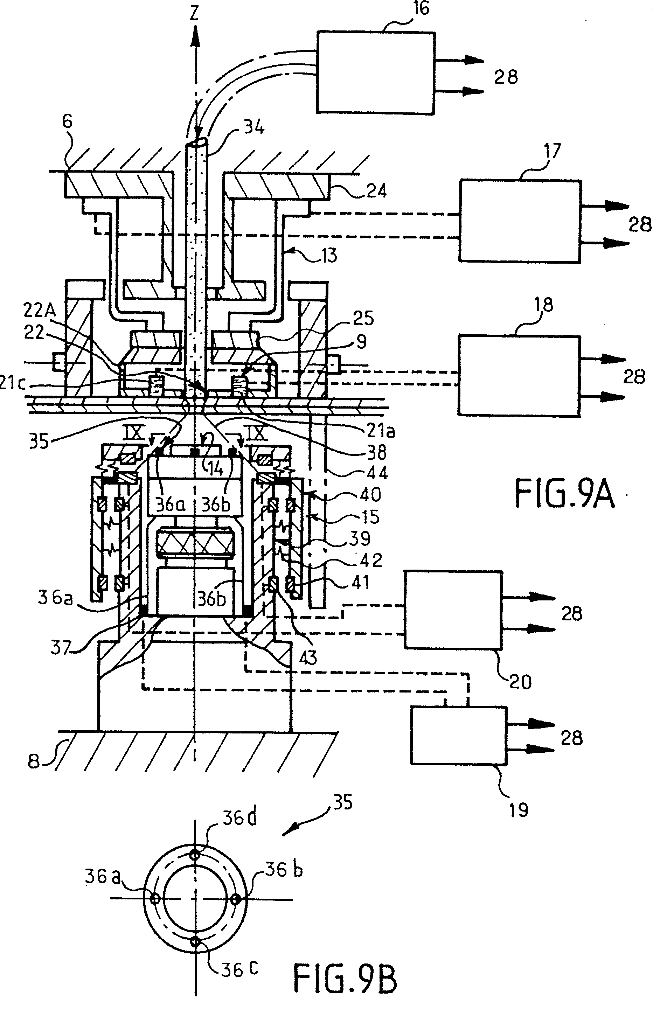

Les déplacements et rotations de la tête 6 commandés à partir du capteur 9, auquel est associé un détecteur d'aplomb 13, seront mieux explicités ci-après à l'appui de la figure 9A.

De même, la tête de travail 8 contenant le tas de rivetage porte pour des raisons déjà évoquées, un dispositif de centrage 14 associé à une référence de centrage 34 sur la tête 6 ainsi que, de façon avantageuse, des détecteurs d'obstacles 15, le tout tel que représenté schématiquement sur la figure 9A.

En revenant à la figure 8C, on conçoit aisément que si la phase de perçage ne nécessite qu'un centrage, puis une mise en aplomb correcte de la perceuse sur la surface de l'assemblage en regard du point (P), ce qui s'effectuait à la main dans la technique antérieure, il n'en est pas de même pour la mise en place du rivet, de la vis ou du boulon et leurs assemblages qui doivent être réalisés avec précision en automatisation. Les études d'insertions automatisées d'une pièce cylindrique dans un trou tel que la mise en place d'un rivet ou d'un boulon, résultent de nombreux travaux, notamment de J. NEVINS et D. WHITNEY "categorization and status of assembly research" report n° P 330 lab. STARK DROOPER 1976, et rappellent que le défaut d'alignement permettant d'éviter le blocage résulte en tout état de cause du dimensionnement et des tolérances d'assemblage et que "l'entonnoir d'insertion" détermine la géométrie spatiale du centrage et de l'aplomb de l'insertion à introduire.

C'est ainsi que selon cette figure 8C, la tolérance radiale de présentation du rivet (R) sur l'axe de son trou pour insertion, devra être inférieure à 0,1 mm après que ledit rivet se soit trouvé dans la zone d'approche du trou (za) et qui est de l'ordre de $\pm$ 3 mm de part et d'autre de l'axe dans l'exemple proposé.

En d'autres termes et pour résumer les différentes séquences de positionnement, on peut indiquer que :

- le manipulateur programmable lourd 1 assure des déplacements du robot 2 selon 0(SP)-X, -Y et -Z plus une rotation autour de Y pour permettre le suivi "surfaciel" de la structure à assembler. Sa précision de positionnement est de l'ordre de 1 mm ; sa tête porteuse est verrouillable dans une position donnée et il est programmé par un logiciel permettant la translation d'un domaine (D) à un autre,

- le robot 2 assure des déplacements de la tête de travail selon 0(TTe)-X, -Y et -Z pour assurer le centrage et l'aplomb sur le point (P). Il assure également deux rotations autour de X et Y.

Sa précision de positionnement est de l'ordre de 0,01mm et il est programmé par un logiciel LUCIFON,

- la tête de travail 6 assure l'escamotage latéral du capteur
9 portant le détecteur d'aplomb 13 afin de laisser en ces lieu et place
la perceuse 11 ou bien la riveteuse/visseuse 10. Ces opérations sont
programmées,

- le manipulateur programmable lourd interne 3 avec son robot
porte-tas 4 et sa tête de travail ou tas 8 assure les mouvements en regard de la tête de travail 6, ce qui demande trois déplacements selon
O(TTi)-X, -Y et -Z plus deux rotations selon O(TTi)-X et -Y. Sa précision
de positionnement est inférieure au mm, son robot peut être asservi au
robot 2 et peut être muni d'un détecteur d'obstacles en raison des très
nombreux éléments existant à l'intérieur d'un fuselage par exemple.

Sur la figure 9A, tous les capteurs et détecteurs transmettent
leurs informations à des blocs de commande et de traitement repérés :

- 16 pour la référence 34 du centreur de tas 14 (émetteur à
fibres optiques),

- 17 pour le détecteur d'aplomb 23 (à jauges de contraintes),

- 18 pour le capteur de centrage 9 (à bobines d'induction),

- 19 pour le centreur de tas 14 (récepteur à fibres optiques
et photodétecteurs),

- 20 pour le détecteur d'obstacles 15 (à magnétorésistances).

Il est à noter que les capteurs et détecteurs dont le fonctionnement va se trouver décrit maintenant, sont ceux qui ont été retenus comme
ayant donné toute satisfaction, mais il est évident à cet égard, que
tout autre type de capteur convenable pourrait tout aussi bien être
mis en oeuvre.

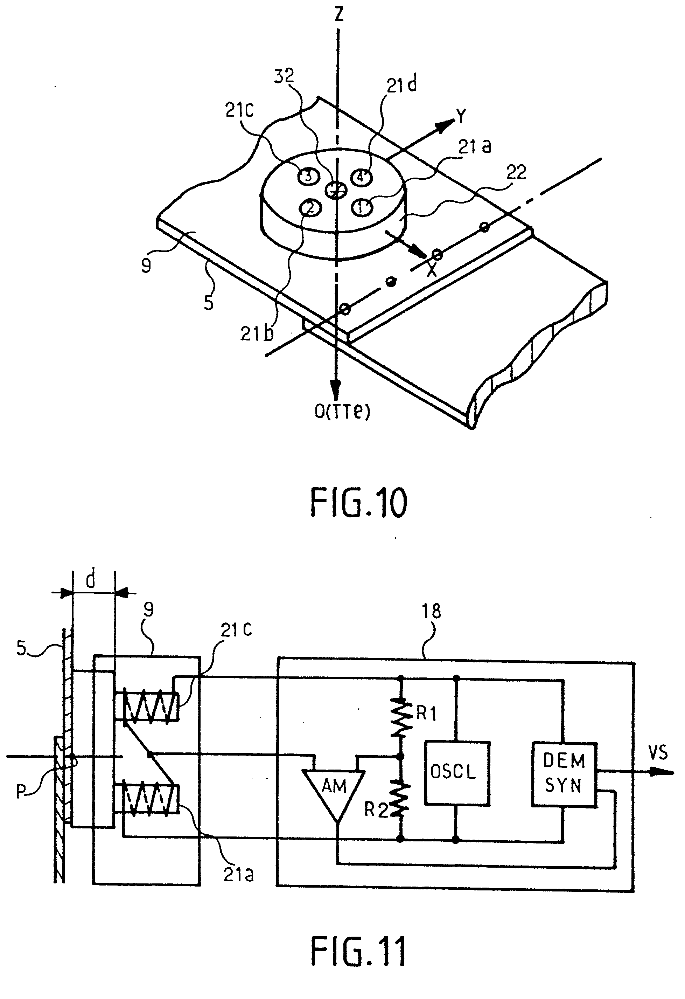

Le capteur de centrage 9 est dans l'exemple représenté du type
inductif à courants de Foucault. Il est constitué de quatre bobines plates
21a à 21d d'axes parallèles à O(TTe)-Z, tel que cela est montré sur les
figures 9A et 10, et disposées en carré symétriquement par rapport à
l'axe ; les droites passant par le centre de symétrie du capteur 9 et
les centres de chaque paire de bobines opposées constituent les deux
axes de sensibilité du capteur. Un trou 22 ménagé dans l'axe permet le
passage d'une fibre optique 34 formant référence du centreur de tas 14.

Comme le montre le schéma de principe de la figure 11, deux bobines 21a et 21 c (ou 21b et 21 d) constituent deux à deux la diagonale d'un pont à courant alternatif comportant deux résistances R1, R2, un amplificateur AM, un oscillateur OSCL et un démodulateur synchrone DEMSYN. Lorsque l'axe de symétrie des bobines est décalé d'une longueur $\Delta$X par rapport à l'axe du trou, il se produit un déséquilibre $\Delta$Z de l'impédance des bobines dû à la dissymétrie des courants de Foucault induits dans la partie de la surface 5 de la structure à assembler en face de l'axe de la bobine. La tension de sortie Vs est alors proportionnelle au décalage par rapport à l'axe dans une plage de linéarité donnée.

Un modèle convenant pour l'exemple donné sur la figure 8A permet d'indiquer les caractéristiques suivantes :

- capteur à deux axes découplés et bobines de 600 spires de fil de 0,08 mm à noyau magnétique ajustable,

- $\pm$ 3 mm de domaine de linéarité,

- résolution à 15 $\mu$m,

- erreur de position globale inférieure à 150 $\mu$m.

Chaque bobine se trouve à une faible distance de la partie de la surface de l'assemblage 5 et est enserrée dans un boîtier 22A.

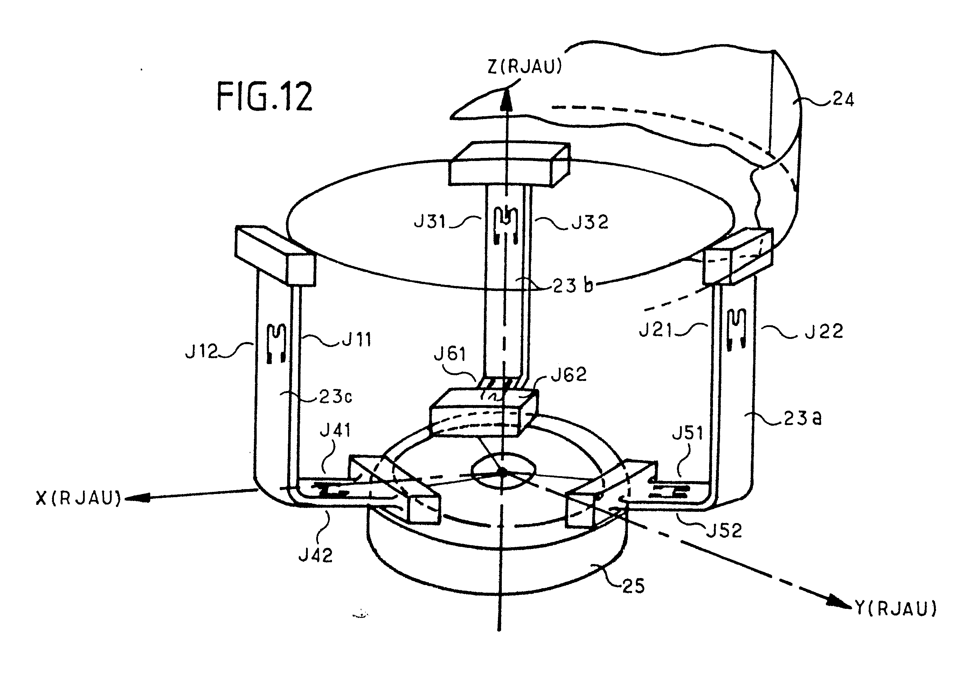

Le détecteur d'aplomb 13 associé au capteur 9 comporte trois jauges extensométriques montées sur des lames métalliques comme indiqué sur les figures 9 et 12.

Il est rappelé ici que les capteurs d'efforts permettent la détermination de l'aplomb par identification d'un torseur complet ou partiel par rapport à un référentiel orthonormé.

Le détecteur d'aplomb à déformations préconisé dans le cadre de la présente invention pour des raisons de simplicité, de précision, de grande sensibilité et de peu d'encombrement, comporte trois poutres métalliques en forme de L repérées 23a, 23b et 23c recevant par collage des jauges extensométriques J11 et J12, J21 et J22, J31 et J32, J41 et J42, J51 et J52 et J61 et J62.

Les trois poutres sont montées en "sandwich" entre des plates-formes cylindriques dont l'une repérée 24 est solidaire du coulisseau dont il sera parlé ci-après et l'autre repérée 25 est une entretoise liée au capteur inductif 9 (voir figure 12). Les plates-formes et entretoises sont considérées comme infiniment rigides avec liaisons de type encastrement.

Le principe de fonctionnement de ces jauges fait appel à la théorie de l'élasticité qui peut, par mesure des allongements au moyen des jauges, déduire les torseurs d'efforts correspondants par rapport à un référentiel orthonormé noté RJAU sur la figure 12.

Les jauges utilisées sont de type courant associées à des conditionneurs, et montées de manière connue.

Il s'agit de mesurer un ensemble de micro-déformations $\Sigma i$ en certains points des trois poutres disposées à 120° sur lesquelles sont collées lesdites jauges. Ces poutres travaillent essentiellement à la flexion, et la déformation enregistrée est un système de fonctions linéaires des efforts appliqués.

Selon la disposition des jauges par rapport au référentiel orthonorméRJAU :

- $(ji1, ji2)_{i = 1 \text{ à } 3}$ donnent les efforts latéraux suivants Fx et Fy par la mesure des moments de flexion,

- $(ji1, ji2)_{i = 4 \text{ à } 6}$ permettent de mesurer l'effort Fz et les moments Mx et My.

Sans entrer dans les détails mathématiques de la modélisation des efforts, il peut être indiqué que le modèle est du type :

$$\begin{vmatrix} Fz \\ \\ Mx \\ \\ My \end{vmatrix} = M . \begin{vmatrix} U1 \\ U2 \\ U3 \\ U4 \\ U5 \\ U6 \end{vmatrix}$$

où Ui sont les réponses des six ponts de jauges utilisés.

La calibration de M a été obtenue par application d'efforts purs connus en direction en des points de coordonnées connues dans le référentiel NRJAU. De l'ensemble d'équations linéaires obtenues, il a été extrait des termes de la matrice M. Une telle calibration permet de lever toute ambiguïté sur la position du référentiel où s'expriment les efforts et par ailleurs de prendre en compte certains éléments indéterminés (collage des jauges...).

L'information sur la mesure des efforts est traitée par microprocesseur muni d'un dispositif d'acquisition des six tensions sous forme analogique en provenance des conditionneurs de jauges extensométriques.

0159269

Le centreur du porte tas 14 comporte, selon la figure 9A, un ensemble permettant un centrage précis de l'ordre de 0,1 mm pour assurer un rivetage correct du rivet. Cet ensemble comprend une source lumineuse intégrée au bloc 16 avec des fibres optiques 34 fixées sur l'ensemble centreur 9 et détecteur d'aplomb 13, ainsi qu'un système récepteur de lumière 35 qui est monté sur le tas.

Le principe de fonctionnement du capteur est tel que, lorsque le capteur 9 en contact avec la tôle est centré sur le trou, un faisceau lumineux 38 de lumière froide est émis depuis 16 en passant par le trou tandis que, de l'autre côté un système récepteur 35 (voir figure 9B) composé de quatre fibres optiques 36a à 36d est relié à des photodétecteurs 37.

La procédure de localisation résulte, tout d'abord, d'un équilibre du signal de sortie issu de la fibre 36a et celui issu de la fibre 36c (en opposition) ce qui fait que le tas 14 se trouve situé à l'abscisse du trou puis, en équilibrant le signal de sortie issu de la fibre 36b et celui issu de la fibre 36d, le tas se centre rigoureusement sur ce trou.

Le principe résulte d'une chaîne de transmission entre les photodétecteurs 37, le circuit de traitement du signal, le calculateur et les actionneurs qui sont tous situés dans le bloc 19.

La détection des obstacles est réalisée dans le présent exemple à l'aide d'un détecteur d'obstacles 15 à magnétorésistances comportant une partie fixe 39, une partie mobile 40, des magnétorésistances 43, des aimants 41 et des ressorts de rappel 42. Ces éléments étant disposés dans l'interface radiale et axiale des parties fixes et mobiles en opposition, la détection se produit par variation de courant dans un pont de WHEATSTONE lorsque le tas 14 entre en contact avec un obstacle 44. Dans ce cas, l'induction varie et un signal électrique apparaît et l'interprétation du déséquilibre dans le pont permet de localiser la direction de l'obstacle et de produire des commandes d'inversion nécessaires. Le signal de détection d'obstacle est par ailleurs traité dans le bloc 20.

Le capteur 9 et le détecteur d'aplomb 13 étant mis en place sur la surface 5, comme cela ressort de la figure 9A, les phases d'assemblage découlent de l'ordinogramme ci-après :

|  |  |
|---|---|
| PHASE DE RECHERCHE ET DE PO- SITIONNE- MENT | . Prépositionnement sur un point en utilisant le manipula-teur programmable en tant que télémanipulateur,<br>. Position après extrapolation,<br>. Contact plan sur plan du capteur localisant le point,<br>. Procédure de centrage du capteur sur le point et enre-gistrement des corrections à apporter pour assurer la perpendicularité par rapport à la tôle,<br>. Eloignement du capteur, ) procédure de rattrapage de<br>. Approche du capteur, ( jeux éventuels<br>. Mémorisation de cette nouvelle position et extrapolation,<br>. Centrage du tas,<br>. Eloignement du capteur,<br>. Mise en place des outils tels que perceuse, riveteuse...,<br>. Approche des outils, |
| PHASE DE RIVETAGE | . Alimentation du rivet,<br>. Effort sur le pistolet,<br>. Effort sur le tas,<br>. Frappe,<br>. Arrêt de la frappe,<br>. Arrêt de l'effort exercé sur le tas,<br>. Arrêt de l'effort exercé sur le pistolet,<br>. Eloignement du pistolet,<br>. Mise en place du système localisateur, |
|  | . Fin du cycle |

Plusieurs remarques doivent être faites :

- les rivets sont alignés et le pas est grossièrement constant,

- lorsqu'il y a rivetage, les trous sont supposés percés sans erreur de diamètre.

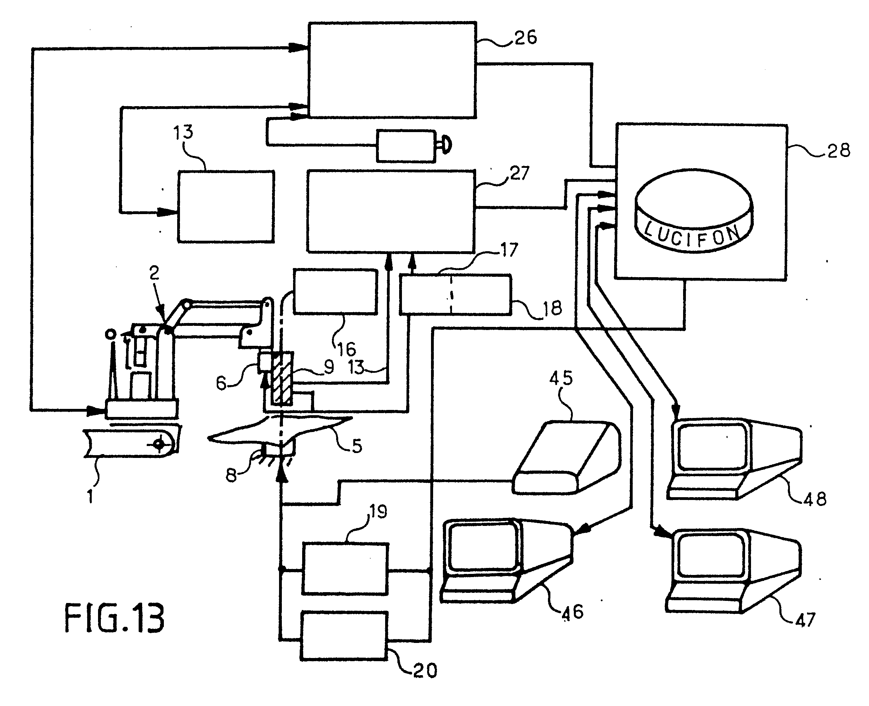

Le matériel informatique nécessaire à l'algorithme de commande du robot 2 (figure 13) comprend essentiellement :

- un microprocesseur 26 chargé de piloter les moteurs pas à pas du robot,

- un microprocesseur 27 chargé de commander les moteurs d'orientation de la tête 6, de numériser les acquisitions analogiques en provenance du capteur inductif 9 et des jauges de contrainte du détecteur d'aplomb 13, de commander les électrovannes habituelles de commande et enfin d'arrêter les manipulateurs en cas de surcharge d'un capteur d'effort (non représenté), et

- un calculateur 28 sur lequel sont implémentés les logiciels généraux qui ont permis d'obtenir une interactivité "homme-système" du niveau requis, tels que commande des manipulateurs, traitement des efforts.

Enfin, le dispositif automatique selon l'invention est complété d'un pupitre de commandes manuelles 45, de consoles graphiques 46, de contrôle 47 et opérateur 48.

Toutes ces opérations ont été organisées autour d'un ensemble de référentiels orthonormés constituant un graphe arborescent pour cinq degrés de liberté commandés autour de O(TTe)-X et -Y et selon O(TTe)-X, -Y et -Z.

En référence à la figure 3, les référentiels orthonormés sont notés ainsi dans le logiciel LUCIFON :

- NRJAO     référence d'extrémité du robot,
- NRJAU     référentiel des efforts de mesure,
- NRRIV     position du capteur inductif,
- NRCO    }  référentiel du capteur magnétique (contact plan
- NRMAG  {  sur plan),
- NREJTA   référentiel robot,
- NCONT n   position réelle du point (P),
- NCONT n   + 1 position estimée du point (P),
- NRTAO     référence sol,
- NRETA     référentiel tête de travail,
- NRCCO     consigne de contact de position pour l'asservissement,
- DEP       vecteur de dimension 6 exprimant la translation et la rotation de NTROU/NRTAO.

L'asservissement en force et/ou position permet de modifier la position du référentiel NRCO dit de contact, par rapport au référentiel NRCCO dit de consigne de contact en fonction, soit de la position relative NRCCO/NRCO, soit des efforts mesurés. Le mouvement de NRCO par rapport à NRCCO est défini axe par axe dans NRCO.

Pour établir un contact plan sur plan (NRMAG appliqué sur la tôle), l'asservissement est paramétré par :

- les consignes en translation suivant les axes X et Y (origine de NRCO sur l'axe Z dans NRCCO),

- la consigne en force Fz suivant l'axe z à satisfaire sauf si l'origine de NRCO est située dans le plan X et Y de NRCCO,

- la consigne de vitesse en rotation autour des axes X et Y de NRCO si les couples mesurés exprimés dans NRCO dépassent un certain seuil.

Pour l'apprentissage de la position d'un point (P) ou d'un trou, on pilote la position de NRCCO par rapport à NRCO à partir d'un contrôle manuel du déplacement du robot en translation, ce qui permet d'obtenir par la suite le contact plan sur plan dès qu'un effort vertical (qui restera borné) apparaîtra.

Dès que le point (P) est situé dans le domaine de capture ou zone d'approche (za) déterminé par le capteur inductif 9, la mesure de l'écart permet de mettre en place le repère NTROU, position estimée du point (P).

La procédure d'extrapolation appliquée est la suivante :

- soit NTROUn, l'ensemble des emplacements précédémment repérés et soit DEPn la position de ces repères par rapport au référentiel NRTAO, on a :

$$DEP = V^1, V^2, V^3, V^4, V^5, V^6.$$

La position extrapolée NCONTn+1 est calculée à partir du déplacement DEPn+1 dont chaque composant Vn+1 est obtenu par la procédure d'extrapolation décrite ci-après :

- extrapolation linéaire ($2 \leqslant n \leqslant 3$) :

on pose : $Vn+1 = a + bn$

on doit vérifier si $m \leqslant n$

$$Vm = a + b.m$$

Les coefficients a et b interviennent linéairement dans l'équation précédente et sont identifiables par utilisation de la notion de pseudo inverse matricielle :

- extrapolation quadratique ($n \geqslant 4$) :

on pose $Vn + 1 = a + b.n + c.n$ et l'on applique la technique précédente.

Dans ce mode d'extrapolation qui peut assurer plus efficacement le suivi d'une ligne courbe de points, nous n'utilisons que les quatre dernières positions des points repérés.

Ainsi, par application d'un tel processus, une ligne de points (P) peut être aisément repérée en apprenant au système la position des deux premiers points seulement.

On voit de la sorte que la procédure indiquée schématiquement sur la figure 2 et montrée à titre d'exemple sur la figure 8A est réalisable sans difficulté à l'intérieur d'un domaine donné (D1).

Dès après l'exploration de ce domaine donné, c'est-à-dire dès que le dernier point (P4) a été exploré, le robot 2 reste assujetti sur cedit dernier point, tandis que le manipulateur programmable lourd 1 produit son déplacement tel que ledit robot 2 soit de nouveau en mesure d'explorer le point suivant (P5) du domaine suivant (D2) et ainsi de suite.

En somme, le robot 2 assure le déplacement programmé de la tête de travail 6 à l'intérieur d'un domaine d'exploration donné, tandis que le manipulateur programmable lourd produit le déplacement dudit robot d'un domaine d'exploration à un autre et ceci constitue l'une des caractéristiques préférées de l'invention.

En effet, et comme cela a été indiqué précédemment, il n'est pas possible de concevoir actuellement un robot unique présentant les mêmes caractéristiques que celles qui sont autorisées par application de l'invention comportant un robot programmé précis et un manipulateur programmable lourd, de grande amplitude, qui lui est asservi.

L'asservissement du manipulateur programmable lourd 1 ne requiert qu'un positionnement peu précis, par exemple de l'ordre de $\pm 1$ mm suffisant pour assurer la localisation du capteur de centrage 9 dans la zone d'approche qui est de l'ordre de $\pm 3$ mm, alors que le centrage précis va s'effectuer ensuite avec une précision inférieure à 0,1 mm et ce, dans une plage aussi étendue que souhaitée telle que celle rencontrée, par exemple, sur un fuselage ou une voilure d'aérodyne.

Les opérations d'assemblage proprement dites telles qu'elles
sont rappelées sur la figure 8 comportent plusieurs stades impliquant
le repérage du point (P), le perçage du trou sur cet emplacement, l'introduction du rivet, de la vis ou du boulon, puis le rivetage ou le
vissage. En variante, une agrafe d'épinglage peut être introduite provisoirement dans le trou.

Ceci implique la mise en position sur le même site de différents organes, ce qui va être exposé maintenant à l'appui des figures
14A à 14C.

Sur ces figures schématiques, ainsi d'ailleurs que sur la figure 7, on a représenté la tête de travail portant les instruments dans
leurs différentes séquences d'opérations :

- en 14A, le capteur inductif 9 avec le détecteur d'aplomb 13
sont en position sur la surface 5 de la structure à assembler au droit
du point (P),

- en 14B, le capteur s'est escamoté sur la gauche pour faire
place à la perceuse 11,

- en 14C, la perceuse s'est déplacée sur la droite pour faire
place à la riveteuse ou visseuse 10 avec conjointement, mise en place
du porte tas (ou porte-écrous) 14. Une alimentation automatique en rivets 32, vis ou boulons, de type connu (non représentée) peut être adjointe.

La tête de travail 6 (selon la figure 7 et 14A à 14C) présente
sensiblement la forme d'un "L" dont un côté externe est lié à ses propres
mécanismes d'orientation à vérins 12 précités (non représentés).

La face interne sensiblement verticale 29 porte une glissière
longitudinale 30 dans laquelle se meut une pièce de glissement solidaire des parties 10 et 11.

La face interne sensiblement horizontale se présente sous la
forme de deux glissières 29A enserrant en glissement un coulisseau portant le capteur 9 et le détecteur 13, ainsi que les parties 10 et 11.

La partie terminale de ces glissières présente une inclinaison vers le haut telle que le capteur 9 et le détecteur 13 se trouvent
lors de leur déplacement, éloignés de la structure (5) vers le haut.

Un vérin 31 assure le déplacement de l'ensemble dans ses glissières 29A et 30 tandis qu'un deuxième vérin 33 détermine la position relative entre le capteur 9 et les éléments 10 et 11.

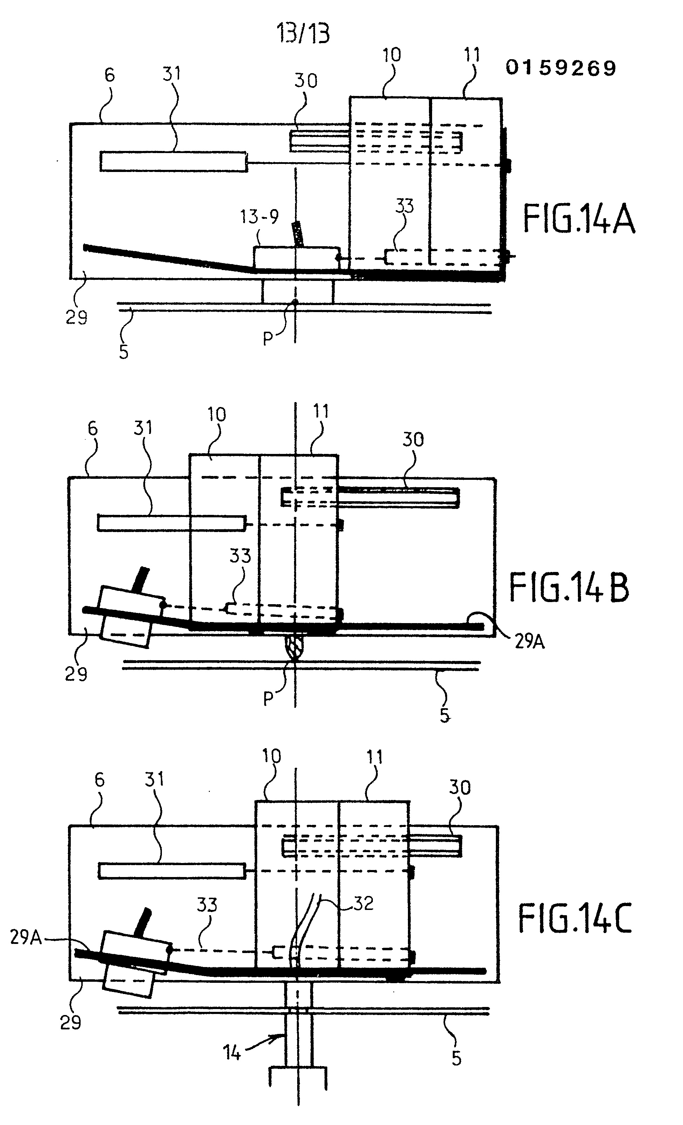

Lors de la phase de détection comportant le centrage sur le point (P) et l'appréciation de l'aplomb, le capteur 9 doit être plaqué sur l'assemblage selon la figure 14A. Dès que ce centrage et cet aplomb ont été réalisés, la tête de travail 6 s'immobilise et le capteur 9 est escamoté latéralement et dégagé par le vérin 31 pour laisser place à la perceuse 11 sur le point (P) comme cela ressort de la figure 14B.

Après perçage, la perceuse est translatée par le vérin 31 pour laisser place à la riveteuse ou à la visseuse 10 qui implique l'application conjointe du porte tas 14 en regard. La dernière phase peut alors avoir lieu après cette dernière opération.

Il est à noter que l'ordre des phases de perçage et de rivetage peut être différé en ce sens que toute une rangée de trous peut être percée en premier puis ensuite assemblée par rivets, vis ou boulons.

Il est évident que la technologie des systèmes de glissement, de perçage, de rivetage et de vissage avec ou sans alimentation automatique de riverts, de vis et/ou de boulons, de commande par vérins hydrauliques ou pneumatiques ou électriques sont suffisamment connus en eux-mêmes pour qu'il s'avère inutile d'en faire la description.

Il est de même évident que la riveteuse 10 et le tas 14 peuvent être remplacés sans difficulté particulière, par un ensemble de soudage par points ou encore T.I.G. (Tungsten Inert Gas), l'un des outils étant une torche de soudage.

Il est évident que la présente description n'a été donnée à titre d'exemple, non limitatif, que pour bien montrer les possibilités offertes par l'invention.

A cet égard, une caméra avec traitement d'images pourrait compléter le système sensitif en vue notamment de faciliter les procédures d'apprentissage et également les détections d'obstacles. Les nombres de degrés de liberté des diverses têtes SP ou TT peut être réduit jusqu'à 1 par exemple, en fonction de la simplicité du travail d'assemblage (surface plane d'assemblage par exemple, sans problème d'aplomb auquel cas, aucun détecteur d'aplomb n'est nécessaire).

0159269

Dans de tels cas simples, un seul manipulateur peut porter les deux têtes de travail par l'intermédiaire de deux robots couplés entre eux, auquel cas il peut suffire d'un seul capteur de centrage et d'un seul détecteur d'aplomb pour les deux têtes. Quant au maillage ou réseau des points de fixation, il peut se ramener à une ligne, ou au contraire correspondre à des mailles de formes très complexes. Lorsque ce ne sont pas des trous, les points de fixation (P) sont avantageusement marqués par un matériau perturbateur de champ électromagnétique, tel qu'une peinture chargée de poudre.

Il est bien entendu par ailleurs que les manipulateurs programmables lourds peuvent être des télémanipulateurs à système mécanique articulé à six axes montés sur rails. L'un des manipulateurs lourds peut aussi être monté en portique encadrant la structure.

Il va de soi que bien d'autres variantes peuvent être proposées par l'homme du métier sans sortir du cadre de l'invention.

0159269

## REVENDICATIONS

1. Procédé de positionnement automatique d'un outil de travail par rapport à une pièce sur laquelle au moins une trace matérielle ponctuelle a été ménagée en un emplacement prédéterminé dont on connaît des coordonnées au moins approximatives sur la pièce, en sorte d'amener une direction de travail caractéristique de l'outil en regard de cette trace, caractérisé en ce qu'on produit un mouvement relatif entre l'outil (10, 11, 14) et la pièce (5) en sorte d'amener l'outil auprès dudit emplacement prédéterminé sur la pièce, on détecte (9) l'écart entre la direction de travail (OZ) de l'outil et la trace (P), et on asservit en position l'outil en sorte d'annuler cet écart, puis l'on détecte (13) l'orientation de la direction caractéristique de l'outil par rapport à une normale (AZ) menée à la surface de la pièce (5) en cette trace (P) et on asservit en orientation l'outil en sorte de faire coïncider cette direction avec cette normale.

2. Dispositif de positionnement automatique d'un outil de travail par rapport à une pièce, adapté à amener une direction de travail caractéristique de cet outil en regard successivement d'une série d'au moins deux traces matérielles (P) ménagées préalablement sur cette pièce en des emplacements prédéterminés dont on connaît des coordonnées au moins approximatives sur la pièce, caractérisé en ce qu'il comporte un un robot (2,4) lié à une structure de référence (R) et muni d'une tête de travail (6,8) admettant au moins un degré de liberté et portant au moins ledit outil de travail (10, 11, 14), un capteur de centrage (9), porté par la tête de travail et adapté à détecter un écart entre la direction de travail (OZ) de l'outil et une trace matérielle (P) sur la pièce (5), ainsi qu'un capteur d'aplomb (13) également porté par la tête de travail et adapté à détecter l'orientation de la normale (Az) menée à la surface de la pièce (5) à l'emplacement d'une trace matérielle (P) par rapport à la direction de travail (OZ) de l'outil, et un système de commande et de traitement (16-20, 26-28) associé au robot, connecté au capteur de centrage et au détecteur d'aplomb, et adapté à amener automatiquement la tête de travail successivement en regard approximativement de chaque trace et, pour chaque trace, à asservir en position la tête de travail par rapport à ladite pièce en sorte d'amener la direction caractéristique de l'outil en regard de cette trace, puis à asservir en orientation la tête de travail vis-à-vis de la pièce, en sorte de faire coïncider la direction de travail de l'outil avec ladite normale.

3. Dispositif selon la revendication 2, caractérisé en ce que le système de commande et de traitement (16-20, 26-28) contient des coordonnées approximatives des traces matérielles, correspondant à une version simplifiée d'un maillage réel selon lequel ces traces matérielles sont réparties sur la pièce (5).

4. Dispositif selon la revendication 2, caractérisé en ce que le capteur de centrage (9) et le détecteur d'aplomb (13) sont solidaires et sont disposés sur la tête de travail, avec l'outil de travail (10,11), en sorte de pouvoir être substitués à ce dernier pour son positionnement, sa direction de travail (OZ) étant définie par rapport à la tête de travail.

5. Dispositif selon la revendication 4, caractérisé en ce que le capteur de centrage (9), le détecteur d'aplomb (13) et l'outil de travail (10,11) sont montés sur la tête de travail (6) par un système à glissières (29A-30) et sont commandés par un moyen de déplacement (31) placé sous la dépendance du système de commande et de traitement associé au robot (2).

6. Dispositif selon la revendication 5, caractérisé en ce que le système à glissières (29A-30) est relevé en une partie terminale pour permettre un escamotage avec éloignement, vis-à-vis de la pièce, du capteur (9) et du détecteur d'aplomb (13) pour l'amenée de l'outil en configuration de travail.

7. Dispositif selon l'une quelconque des revendications 2 à 6, caractérisé en ce que le capteur de centrage (9) est du type inductif à courants de Foucault, et comporte quatre bobines plates (21a-21d) à axes parallèles disposés sensiblement perpendiculairement à la surface de ladite pièce selon une géométrie en carrée, lesdites bobines constituant deux à deux les diagonales d'un pont à courant alternatif faisant partie d'un circuit tel que, lorsque l'axe de symétrie des bobines est décalé d'une longueur (X) par rapport à l'aplomb de la trace matérielle (P), il se produise, du fait de cette trace, un déséquilibre (Z) de l'impédance des bobines dû à la dissymétrie des courants de Foucault induits, ce qui est interprété comme signal de décalage.

8. Dispositif selon l'une quelconque des revendications 2 à 7, caractérisé en ce que le détecteur d'aplomb (13) est du type à déformation et comporte trois poutres (23a à 23c) disposées à 120° entre deux plates-formes, dont l'une (24) est solidaire de la tête de travail (6) et l'autre (25) est solidaire du capteur de centrage (9) au contact de la surface de la pièce (5), ces plates-formes comportant des liaisons de type encastrement et lesdites poutres portant des jauges extensométriques (J) pour la mesure des microdéformations en certains points desdites poutres (23a,b,c) et la transmission au système de traitement et de commande de signaux correspondants, dont ce dernier déduit un signal de commande de correction d'aplomb pour la tête de travail (6).

9. Dispositif selon l'une quelconque des revendications 2 à 8, caractérisé en ce que la tête de travail porte une perceuse (11) liée en glissement au capteur de centrage (9) et au détecteur d'aplomb (13) sur la tête de travail (6) et placée sous l'action d'un vérin (31) commandé par le système de commande et de traitement de telle sorte que, après centrage sur la trace (P), le perçage puisse s'effectuer après substitution au capteur de centrage.

10. Dispositif selon l'une quelconque des revendications 2 à 9, destiné à amener la direction de travail de l'outil successivement en regard d'une pluralité de traces matérielles ménagées sur la pièce dans une zone de travail plus grande que le débattement du robot, caractérisé en ce qu'il comporte un manipulateur (1,3) verrouillable, lié à la structure de référence (R), disposant d'un débattement au moins aussi grand que la zone de travail définie sur la pièce, et muni d'une tête porteuse (6,8) ayant au moins un degré de liberté vis-à-vis de la structure de référence et sur laquelle est monté le robot (2,4), le système de commande et de traitement associé au robot étant adapté, la zone de travail étant décomposée en domaines d'exploration (D), à commander le manipulateur en sorte d'amener automatiquement le robot en regard, successivement, de chaque domaine d'exploration, à verrouiller en position le manipulateur vis-à-vis de la structure de référence, puis à commander le robot en sorte d'amener l'outil de travail en regard successivement de chaque trace (P) ménagée dans le domaine d'exploration considéré.

11. Dispositif selon la revendication 10, caractérisé en ce que les domaines successifs d'exploration (D1,D2) comprenant au moins une trace matérielle (P4) en commun, le système de commande et de traitement est adapté à maintenir par asservissement l'outil de travail en regard de cette trace commune tandis que le robot est déplacé par le manipulateur d'un domaine d'exploration au suivant.

12. Dispositif selon l'une quelconque des revendications 2 à 11, comportant un outil de travail nécessitant l'emploi d'un outil complémentaire devant être disposé par rapport à la pièce à l'opposé de l'outil de travail, caractérisé en ce qu'il comporte en outre un robot auxiliaire (4) muni d'une tête de travail auxiliaire (8) admettant par rapport à ce robot au moins un degré de liberté et portant, avec l'outil complémentaire (14), un capteur de centrage interne (35) sensible à la position de cet outil vis-à-vis de la tête de travail (6), ainsi qu'un système de commande et de traitement auxiliaire pour commander le robot auxiliaire en sorte d'asservir en position la tête auxiliaire vis-à-vis de la tête de travail.

13. Dispositif selon la revendication 12, caractérisé en ce que le premier robot (2) et le robot auxiliaire (4) sont portés par des manipulateurs différents (1,3).

14. Dispositif automatique selon la revendication 12 ou la revendication 13, caractérisé en ce que les traces matérielles étant des trous, le capteur de centrage interne est de type optique, et comporte, sur la tête de travail, une fibre optique (34) connectée à une source lumineuse (16) et débouchant au centre du capteur de centrage (9) près de la pièce, ainsi que, sur la tête auxiliaire de travail, un récepteur de lumière (35) à quatre fibres optiques reliées à des photodétecteurs (37) eux-mêmes reliés au système de commande et de traitement en vue d'un centrage rigoureux de l'outil complémentaire par rapport à l'axe du trou.

15. Dispositif selon l'une quelconque des revendications 12 à 14, caractérisé en ce que l'une au moins des têtes (6,8) porte un détecteur d'obstacles (15) connecté au système de commande et de traitement associé en vue d'un contournement d'éventuels obstacles (44).

16. Dispositif automatique selon la revendication 15, caractérisé en ce que le détecteur d'obstacles est du type à magnétorésistances (15) et comporte une partie fixe (39) et une partie mobile (40), des magnétorésistances (43), des aimants (41), et des ressorts de rappel (42) disposés dans les interfaces radial et axial desdites parties fixes et mobiles, agencés de telle sorte que se produit une variation de courant dans un pont de Wheatstone lorsque ledit détecteur entre en contact avec un obstacle quelconque (44), l'interprétation du déséquilibre dans ledit pont permettant au système de commande et de traitement de localiser la direction dudit obstacle et de produire pour le robot des commandes d'inversion appropriées.

17. Dispositif automatique selon la revendication 15 ou la revendication 16, caractérisé en ce que le détecteur d'obstacles (15) est assorti d'une caméra à traitement d'images permettant de faciliter les procédures d'apprentissage et de détection d'obstacles.

18. Dispositif selon l'une quelconque des revendications 13 à 17 caractérisé en ce que ses têtes de travail portent des outils complémentaires d'assemblage (10,14) destinés à être disposés de part et d'autre d'une pièce constituée d'éléments de structure (5a,5b) à assembler.

19. Dispositif selon la revendication 18, caractérisé en ce que la tête de travail porte un dispositif de rivetage (10), et la tête de travail auxiliaire porte un tas de rivetage (14).

20. Dispositif selon l'une quelconque des revendications 11, 12 et 14, caractérisé en ce que le manipulateur (1) est un télémanipulateur à système articulé à six axes monté sur rails (7).

FIG.1

FIG. 2

0159269

FIG.3

0159269

FIG. 4

FIG.5

FIG.6

0159269

FIG.7

0159269

FIG.8A

P1    D2              PAS X

Pn

D1                    PAS Y

FIG.8B    FIG.8C    FIG.8D    FIG.8E

P         R

FIG.9A

FIG.9B

0159269

FIG.10

FIG.11

FIG.12

Z(RJAU)

24

J31    J32

23 b

J12    J11    J21    J22

J61

J62

23c    23a

J41    J51

X(RJAU)

J42    J52

25

Y(RJAU)

11/13

0159269

FIG.13

13/13     0159269

FIG.14A

FIG.14 B

FIG.14C

### Office européen
### des brevets

## RAPPORT DE RECHERCHE EUROPEENNE

EP  85 40 0724

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl 4) |
|---|---|---|---|
| D,X | MACHINE MODERNE, vol. 61, décembre 1967, pages 3-7, Paris, FR; G. MORESSEE: "Machines à souder par points à commande numérique pour la construction aérospatiale d'avant-garde" * Page 6, paragraphes "Adaptation à la forme" et "Commandes programmées" * | 1,2,20 | B 25 J  13/08 B 25 J   9/00 |
| D,A | GB-A-2 088 095  (TOKICO) * Revendication 1 * | 1,2,17 | |
| A | US-A-3 935 950  (BURCH) *  Résumé;  colonne  10,  lignes 23-36 * | 2 | |
| A | GB-A-2 108 079  (BRITISH AEROSPACE) * Revendication 1; page 1, lignes 110-121 * | 9 | |
| A | DE-A-2 922 825  (MESSER GRIESHEIM) * Revendications 1,3,7 * | 1,2 | |
| A | EP-A-0 021 972  (SORMEL) | | |
| A | US-A-4 011 437  (HOHN) | | |
| | ---        -/- | | |

**DOMAINES TECHNIQUES RECHERCHES (Int. Cl.4)**

B 25 J
B 23 K
B 23 Q
B 21 J

Le présent rapport de recherche a été établi pour toutes les revendications

| Lieu de la recherche | Date d'achèvement de la recherche | Examinateur |
|---|---|---|
| LA HAYE | 15-05-1985 | LAMMINEUR P.C.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

Office européen
des brevets

**RAPPORT DE RECHERCHE EUROPEENNE**

EP 85 40 0724

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int Cl 4) |
|---|---|---|---|
| A | EP-A-0 064 454 (COMMISSARIAT A L'ENERGIE ATOMIQUE)<br>* Revendications 12-14 *<br><br>--- | 2,7 | |
| A | US-A-3 890 552 (DEVOL)<br><br>* Colonne 6, lignes 36-50 *<br><br>----- | 12,13, 19 | |

DOMAINES TECHNIQUES
RECHERCHES (Int. Cl.4)

Le present rapport de recherche a été etabli pour toutes les revendications

| Lieu de la recherche | Date d achèvement de la recherche | Examinateur |
|---|---|---|
| LA HAYE | 15-05-1985 | LAMMINEUR P.C.G. |